# FASCICULE DE BREVET EUROPEEN

(11) **EP 0 461 326 B1**
(45) Date de publication et mention de la délivrance du brevet: **09.03.1994**
(21) Numéro de dépôt: 90403668.8
(22) Date de dépôt: 19.12.1990
(51) Int. Cl.: F16D 7/04, B01F 13/10, F16D 1/10

(54) **Dispositif limiteur de couples pour centre modulaire de mélangeage, notamment pour peintures et produits analogues**
Drehmomentbegrenzungseinrichtung für eine modulare Mischeinheit, insbesondere für Farben und dergleichen
Torque limiting device for a modular mixing assembly, in particular for paints and similar products

(30) Priorité: 11.06.1990 FR 9007221
(43) Date de publication de la demande: 18.12.1991
(73) Titulaire: FILLON-PICHON S.A., F-78120 La Boissière-Ecole (FR)
(72) Inventeur: Fillon, Daniel, F-78120 La Boissiere Ecole (FR); Lesimple, Michel, F-28210 Nogent Le Roi (FR)
(74) Mandataire: Madeuf, Claude Alexandre Jean

(56) Documents cités:
- BE-A- 660 158
- US-A- 2 716 875
- US-A- 2 730 666
- US-A- 2 764 882
- US-A- 2 802 649
- US-A- 2 965 363
- US-A- 3 054 600
- US-A- 3 118 653
- US-A- 3 228 209
- PATENT ABSTRACTS OF JAPAN, vol. 10, no. 222 (M-504)[2278], 2 août 1986;& JP-A-61 59 021 (RICOH) 26-03-1986

## Description

L'invention concerne les centres de mélangeage pour peintures et produits anologues. Ces centres de mélangeage se présentent souvent sous la forme d'armoires constituées par des modules superposés verticalement. Plusieurs armoires peuvent, en outre, etre accouplées horizontalement.

Chaque module de chaque armoire comporte des organes d'accouplement saillant de la paroi supérieure et qui sont entrainés en permanence de façon à permettre l'entraînement immédiat d'agitateurs de pots qui contiennent la peinture ou autres produits et dont le couvercle est muni d'un élément d'accouplement complémentaire amené en prise avec l'organe d'accouplement tournant en permanence.

Il est important que des détériorations ne puissent pas se produire lorsqu'un pot agitateur est mis en place ou retiré d'un module du centre de mélangeage et il est plus important encore que les organes d'accouplement tournant en permanence ne puissent pas être à l'origine d'accidents corporels.

L'invention résout le problème exposé ci-dessus en créant un nouveau dispositif limiteur de couple qui assure simultanément l'assemblage des éléments menants et des organes d'accouplement tournant en permanence du centre de mélangeage.

US-A-3 118 653 concerne un centre de mélangeage du même type que celui auquel se réfère l'invention, ce centre comprenant, ainsi que l'illustrent clairement en particulier les fig. 1 et 2, des éléments menants semblables à ceux décrits dans la présente demande de brevet et énoncés dans le préambule de la revendication 1 annexée.

Cette publication ne montre cependant pas de limiteur de couple.

US-A-2 716 875 concerne bien un limiteur de couple mais il s'agit d'une toute autre technique puisque l'objet décrit est destiné à limiter la force de tension pouvant être exercée sur le remontoir d'une montre.

Conformément à l'invention, le centre de mélangeage notamment pour peintures et produits analogues dans lequel des éléments menants sont entraînés en permanence par un élément de transmission pour, à leur tour entraîner un organe d'accouplement avec lequel un élément d'accouplement complémentaire d'un pot agitateur est amené en prise est caractérisé en ce que chaque élément menant comporte une poulie reliée à l'arbre d'entraînement d'un organe d'accouplement par un moyen élastique associé à des saillies interposées entre l'arbre et la poulie de sorte que lesdites saillies désaccouplent l'arbre de la poulie lors d'un dépassement inacceptable du couple de retenue appliqué à l'organe d'accouplement.

Diverses autres caractéristiques de l'invention ressortent d'ailleurs de la description détaillée qui suit.

Des formes de réalisation de l'objet de l'invention sont représentées, à titre d'exemples non limitatifs, aux dessins annexés.

La fig. 1 est une perspective éclatée partielle d'un centre modulaire de mélangeage notamment pour peintures et produits analogues mettant en oeuvre le dispositif.

La fig. 2 est une coupe transversale d'un des éléments menants que comporte le centre de la fig. 1.

La fig. 3 est une vue prise suivant la ligne III-III de la fig. 2.

Les fig. 4 et 4a sont des coupes, à plus grande échelle, illustrant deux positions caractéristiques d'organes apparaissant aux fig. 2 et 3.

La fig. 5 est une élévation latérale vue sensiblement suivant la ligne V-V de la fig. 2.

La fig. 6 est une coupe prise suivant la ligne VI-VI de la fig. 5 illustrant une position caractéristique.

La fig. 7 est une élévation d'un élément menant analogue mais illustrant une variante.

La fig. 8 est une coupe prise suivant la ligne VIII-VIII de la fig. 7.

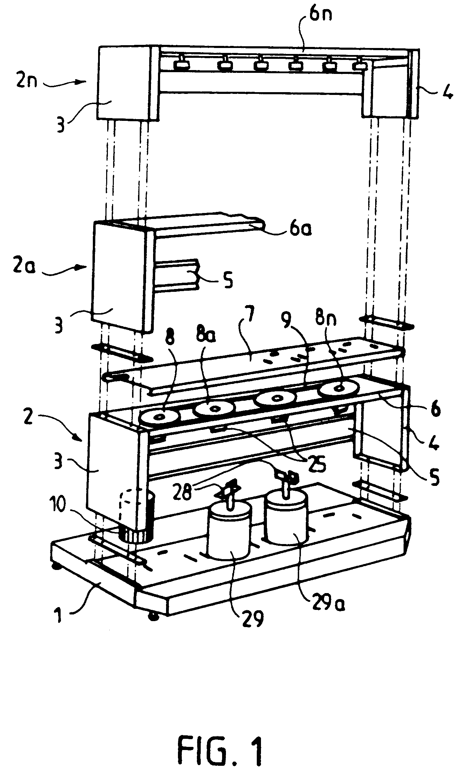

La fig. 1 du dessin illustre les éléments essentiels d'un centre modulaire de mélangeage. Ce centre comporte un socle 1 pour le support de modules superposés 2, 2a ... 2n. Chaque module comporte deux panneaux latéraux 3, 4, de préférence creux, reliés par des traverses 5 disposées sur un côté seulement. Les panneaux 3, 4 sont, en outre, reliés à leur partie supérieure par un boîtier 6 destiné à être fermé par un couvercle 7 dont le dessus constitue le socle d'un module adjacent.

Chaque boîtier 6 comporte une série d'éléments menants 8, 8a, ... 8n dont le nombre dépend de la longueur des boîtiers. Les éléments menants sont reliés, entre autres, par un élément de transmission 9, par exemple une courroie ou une chaîne ou un autre moyen analogue de la technique.

Les éléments menants des différents boîtiers 6, 6a ... 6n sont, eux-mêmes, entraînés à partir d'un moteur électrique 10 pouvant être monté sur le socle 1 comme cela est illustré à la fig. 1 ou en un autre emplacement sur le dessus du couvercle du dernier boîtier 6n, ledit moteur 10 étant relié par une transmission non représentée car pouvant être constituée par de nombreux moyens connus de la technique.

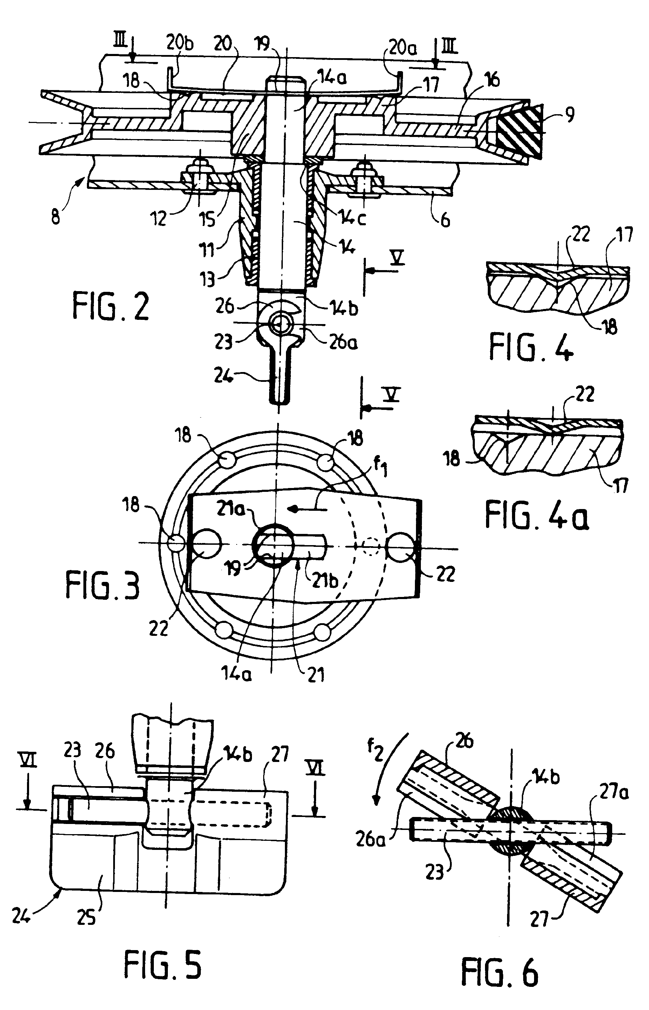

Les fig. 2 à 6 illustrent une première réalisation d'un élément menant à limiteur de couple suivant l'invention.

L'élément menant comporte une cage de palier 11 reliée au fond du boîtier 6 par des organes de fixation 12. La cage de palier contient des coussinets 13 pour un arbre 14 dont l'extrémité 14a traverse le moyeu 15 d'une poulie 16 dans la gorge de laquelle passe l'élément de transmission 9 décrit dans ce qui précède.

Le dessus du moyeu 15 délimite une couronne 17 dont le dessus présente des trous borgnes 18 ou d'autres évidements qui sont avantageusement disposés de façon à être diamétralement opposés deux à deux. L'extrémité 14a de l'arbre 14 présente, juste au-dessus de sa partie qui s'étend au-delà du moyeu 15, des saignées 19 qui sont diamétralement opposées à la fig. 3. Les saignées 19 s'étendent de préférence à un niveau légèrement inférieur au dessus de la couronne 17.

Une lame élastique 20 dont les extrémités 20a, 20b sont cambrées présente à sa partie médiane une lumière 21 conformée en trou de serrure c'est-à-dire que ladite lumière présente une partie circulaire 21a de diamètre correspondant à celui de l'extrémité 14a de l'arbre 14 et une partie rectangulaire 21b dont la largeur correspond à la partie de l'extrémité 14a de l'arbre qui s'étend entre le fond des saignées 19.

La lame élastique 20 présente, près de ses extrémités, des saillies 22, par exemple des bossages.

Pour monter l'arbre 14, il suffit de l'engager dans les coussinets 13 puis dans le moyeu de poulie 15 et ensuite de mettre en place la lame élastique 20 en engageant l'extrémité saillante 14a dans la partie circulaire de la lame 20.

En faisant coulisser la lame 20 suivant la flèche f₁ de la fig. 3, la partie 21b est introduite dans les saignées 19, ce qui a pour effet de relier l'arbre 14 axialement de la lame 20 en même temps que cet arbre est fixé angulairement à ladite lame 20 qui constitue une clavette.

En prévoyant que les saignées 19 se trouvent à un niveau légèrement inférieur au dessus de la couronne 17 et en faisant que l'extrémité 14a de l'arbre 14 soit de plus petit diamètre, il en résulte que le moyeu 15 de la poulie est maintenu contre l'épaulement 14c de l'arbre et que ladite lame 20 exerce une pression constante sur le dessus de la couronne 17.

Les saillies 22 de la lame 20 sont normalement engagées dans les trous borgnes ou autres évidements 18 de sorte qu'un mouvement de rotation imprimé à la poulie 16 est transmis à l'arbre 14 par la lame 20, le couple transmissible étant toutefois en dépendance de la pression exercée par la lame élastique 20 sur la couronne 17 et en dépendance aussi de la forme et des dimensions des saillies 22 et trous borgnes 18 ou autres évidements.

La seconde extrémité 14b de l'arbre 14 est munie, comme le montrent les fig. 5 et 6, d'une broche transversale 23 sur laquelle est monté, de préférence clipsé, un organe d'accouplement 24 comportant une palette 25 s'étendant en dessous de deux manchons ouverts coaxiaux 26, 27 dont l'ouverture 26a, 27a est de hauteur légèrement inférieure au diamètre de la broche 23. De cette manière le montage de l'organe d'accouplement 24 s'effectue, comme illustré, c'est-à-dire qu'il est amené au niveau de la broche 23 en faisant un angle avec celle-ci puisqu'il est tourné dans le sens de la fléche f₂ pour que les deux côtés de la broche 23 entrent par encliquetage dans les manchons.

Chaque organe d'accouplement 24 (fig. 1) est destiné à coopérer avec un élément d'accouplement complémentaire 28 que comportent des pots agitateurs 29, 29a ... portés par le socle 1 ou la partie formant socle des couvercles 7 des modules superposés.

Comme cela ressort de la description qui précède, lorsque les organes d'accouplement 24 d'un élément menant 8 sont en prise avec un élément d'accouplement complémentaire 28 d'un pot agitateur 29, ce qui est obtenu par coulissement du pot agitateur sur un socle choisi, l'élément d'accouplement complémentaire 28 est automatiquement entraîné puisque tous les éléments menants 8 du centre modulaire tournent en permanence.

Si, pour un motif quelconque, l'élément d'accouplement complémentaire 28 d'un pot agitateur n'est pas mis en place correctement ou si par inadvertance un corps étranger vient en contact avec l'organe d'accouplement 24 d'un des éléments menants 8 alors le limiteur de couple que constitue la lame élastique 20 entre en jeu c'est-à-dire que la ou les saillies 22 sortent du ou des trous borgnes 18 de la poulie 16 qui continue à être entraînée sans que l'arbre 14 puisse continuer à tourner.

Dès que cesse l'évènement ayant provoqué le désaccouplement de la lame élastique 20, les saillies 22 entrent à nouveau dans le jeu de trous borgnes 18 et l'entraînement de l'arbre 14 ainsi que celui de l'organe d'accouplement 24 est repris.

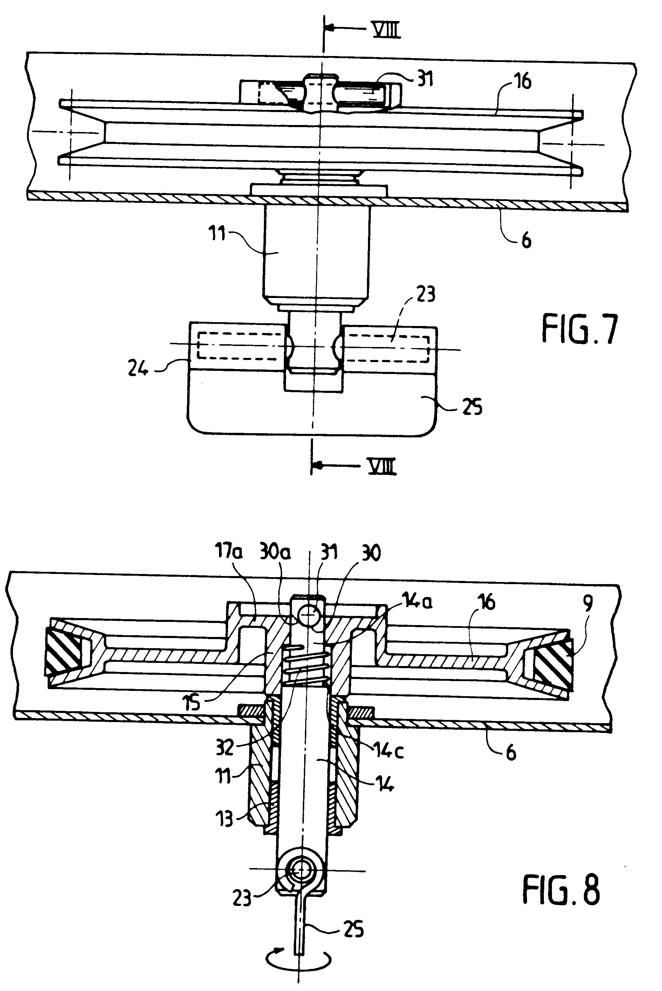

Les fig. 7 et 8 illustrent une variante selon laquelle le moyeu 15 de la poulie 16 forme une couronne 17a présentant au moins un jeu d'encoches 30 à bord incliné 30a.

Dans cette réalisation, l'extrémité 14a de plus petit diamètre de l'arbre 14 est munie de saillies 31 constituées, par exemple, par une broche traversante et un ressort de compression 32 est interposé entre l'épaulement 14c et la poulie 16.

L'entraînement de la poulie 16 est assuré comme précédemment par la courroie 9. Si un couple excessif est appliqué alors à l'organe d'accouplement 24, la broche 31 glisse le long du bord incliné 30a de l'encoche 30 en venant ainsi sur le dessus de la couronne 17a, ce qui comprime légèrement le ressort 32 qui remplit la même fonction que la lame élastique 20 décrite dans ce qui précéde.

Dès lors que la broche 31 est sortie de l'encoche 30, l'entraînement de l'arbre 14 est interrompu mais reprend immédiatement dès que cesse la perturbation ayant provoqué l'augmentation anormale du couple.

L'invention comme définie par les revendications n'est pas limitée aux exemples de réalisation, représentés et décrits en détail, car diverses modifications peuvent y être apportées sans sortir du cadre des revendications. En particulier, les saillies 22 peuvent être constituées par une multiplicité de picots et à la limite par une surface de friction.

## Revendications

1. Centre de mélangeage notamment pour peintures et produits analogues dans lequel des éléments menants (8) sont entraînés en permanence par un élément de transmission (9) pour, à leur tour entraîner par un arbre (14), un organe d'accouplement (24) avec lequel un élément d'accouplement complémentaire (28) d'un pot agitateur (29) est amené en prise, caractérisé en ce que chaque élément menant (8) comporte une poulie (16) reliée à l'arbre (14) d'entraînement d'un organe d'accouplement (24) par un moyen élastique (20, 32) associé à des saillies (22, 31) interposées entre l'arbre (14) et la poulie (16) de sorte que lesdites saillies (22, 31) désaccouplent l'arbre (14) de la poulie lors d'un dépassement inacceptable du couple de retenue appliqué à l'organe d'accouplement (24).

2. Centre selon la revendication 1, caractérisé en ce que les saillies (22) sont formées par une lame élastique reliée sans pouvoir tourner à l'arbre (14) et prenant appui élastiquement sur une couronne (17) présentant des trous borgnes (18) ou autres évidements que présente la poulie (16) de chaque élément menant (8).

3. Centre selon l'une des revendications 1 ou 2, caractérisé en ce que la lame élastique (20) présente une lumière (21) en forme de trou de serrure dont la partie rectangulaire (21b) est engagée dans des saignées (19) de l'arbre (14).

4. Centre selon l'une des revendications 1 à 3, caractérisé en ce que les saignées (19) sont formées dans une partie de plus petit diamètre (14a) de l'arbre (14) et s'étendent à un niveau inférieur à celui d'une couronne (17) sur laquelle prend appui la lame (20) de sorte qu'en position de travail ladite lame (20) est déformée élastiquement et maintient un épaulement (14c) de l'arbre (14) contre la poulie (16).

5. Centre selon l'une des revendications 1 à 4, caractérisé en ce que la lame élastique (20) présente deux saillies (22) en forme de bossage qui correspondent à des trous borgnes (18) ou autres évidements formés dans la poulie (16) dans des positions pour lesquelles lesdits trous borgnes ou autres évidements sont diamétralement opposés.

6. Centre selon la revendication 1, caractérisé en ce que les saillies (31) sont constituées par une broche traversant une partie de plus petit diamètre (14a) de l'arbre (14), ladite broche étant maintenue par un ressort de compression (32) dans des encoches (30) à bord incliné (30a) de la poulie (16).

7. Centre selon l'une des revendications 1 à 6, caractérisé en ce que l'arbre (14) est maintenu dans des coussinets (13) d'une cage de palier (11) fixée à un boîtier (6) du centre de mélangeage par le dispositif limiteur de couple.

8. Centre selon l'une des revendications 1 à 7, caractérisé en ce que l'extrémité libre (14b) de l'arbre (14) comporte une broche transversale (23) engagée dans des manchons ouverts (26, 27) d'un organe d'accouplement (24).

9. Centre selon l'une des revendications 1 à 8, caractérisé en ce que la broche (23) de l'extrémité libre (14b) de l'arbre (14) est maintenue par clipsage dans les manchons ouverts (26, 27).

## Patentansprüche

1. Mischeinheit, insbesondere für Farben und dergleichen, in der treibende Organe (8) von einem Übertragungsorgan (9) ständig angetrieben werden, um ihrerseits über eine Welle (14) ein Kupplungsteil (24) mitzunehmen, mit dem ein komplementäres Kupplungsteil (28) eines Rührtopfes (29) in Eingriff gebracht ist, dadurch gekennzeichnet, daß jedes treibende Organ (8) eine Scheibe (16) aufweist, die mit der Antriebswelle (14) eines Kupplungsteils (24) über ein elastisches Bauteil (20, 32) verbunden ist, welches Vorsprüngen (22, 31) zugeordnet ist, die zwischen die Welle (14) und die Scheibe (16) in der Weise zwischengeschaltet sind, daß die genannten Vorsprünge (22, 31) die Kupplung zwischen der Welle (14) und aus der Scheibe lösen, wenn das auf das Kupplungsteil (24) ausgeübte Rückhaltemoment in unzulässigem Maße überschritten wird.

2. Einheit nach Anspruch 1, dadurch gekennzeichnet, daß die Vorsprünge (22) von einem elastischen Plättchen gebildet sind, das mit der Welle (14) drehfest verbunden ist und sich elastisch an einem Blindlöcher (18) oder andere Aussparungen aufweisenden Kranz (17) abstützt, mit dem die Scheibe (16) jedes treibenden Organs (8) versehen ist.

3. Einheit nach einem der Ansprüche 1 oder 2, dadurch gekennzeichnet, daß das elastische Plättchen (20) einen schlüssellochförmigen Schlitz(21) aufweist, dessen rechteckiger Abschnitt (21b) in Ausnehmungen (19) der Welle (14) eingreift.

4. Einheit nach einem der Ansprüche 1 bis 3, dadurch gekennzeichnet, daß die Ausnehmungen (19) in einem Abschnitt von kleinerem Durchmesser (14a) der Welle (14) ausgebildet sind und sich auf einer niedrigeren Höhe als ein Kranz (17) erstrecken, auf dem sich das Plättchen (20) abstützt, derart, daß das Plättchen (20) in der Arbeitsstellung elastisch verformt ist und eine Schulter (14c) der Welle (14) in Anlage an der Scheibe (16) hält.

5. Einheit nach einem der Ansprüche 1 bis 4, dadurch gekennzeichnet, daß das elastische Plättchen (20) zwei buckelförmige Vorsprünge (22) aufweist, die Blindlöchern (18) oder anderen Aussparungen entsprechen, die in der Scheibe (16) in Stellungen ausgebildet sind, in denen die genannten Blindlöcher oder anderen Aussparungen diametral entgegengesetzt angeordnet sind.

6. Einheit nach Anspruch 1, dadurch gekennzeichnet, daß die Vorsprünge (31) von einem Stift gebildet sind, der einen Abschnitt von kleinerem Durchmesser (14a) der Welle (14) durchdringt, wobei der genannte Stift durch eine Druckfeder (32) in Rasten (30) mit schrägem Rand (30a) der Scheibe (16) gehalten ist.

7. Einheit nach einem der Ansprüche 1 bis 6, dadurch gekennzeichnet, daß die Welle (14) in Lagerschalen (13) eines an einem Gehäuse (6) der Mischeinheit befestigten Lagerkäfigs (11) durch die Drehmomentbegrenzungseinrichtung gehalten ist.

8. Einheit nach einem der Ansprüche 1 bis 7, dadurch gekennzeichnet, daß das freie Ende (14b) der Welle (14) einen Querstift (23) aufweist, der in offene Hülsen (26, 27) eines Kupplungsteils (24) eingreift.

9. Einheit nach einem der Ansprüche 1 bis 8, dadurch gekennzeichnet, daß der Stift (23) des freien Endes (14b) der Welle (14) durch Einschnappen in die offenen Hülsen (26, 27) gehalten ist.

## Claims

1. Mixing centre in particular for paints and like products, in which the driving member (8) are driven permanently by a transmission element (9) for, on their turn, driving, via a shaft (14), a coupling member (24) with which a complementary coupling element (28) of a stirring pot (29) is brought into engagement, characterized in that each driving member (8) comprises a pulley (16) connected to the driving shaft (14) of a coupling member (24) by a resilient means (20, 32) associated with protrusions (22, 31) interposed between the shaft (14) and the pulley (16), whereby said protrusions (22, 31) disconnect the shaft (14) from the pulley when there is an unacceptable excess of a retaining torque applied to the coupling member (24).

2. Centre according to claim 1, characterized in that the protrusions (22) are formed by a resilient blade connected to the shaft (14) without being able to rotate and bearing resiliently on a ring (17) having blind holes (18) or other recesses formed on the pulley (16) of each driving member (8).

3. Centre according to one of claims 1 or 2, characterized in that the resilient blade (20) has a keyhole shaped opening (21), the rectangular portion (21b) of which is engaged into cuts (19) of the shaft (14).

4. Centre according to one of claims 1 to 3, characterized in that the cuts (19) are formed in a portion of smaller diameter (14a) of the shaft (14) and are extended at a level which is lower than that of a ring (17) on which bears the blade (20), whereby, in a working position, said blade (20) is resiliently deformed and maintains a shoulder (14c) of the shaft (14) against the pulley (16).

5. Centre according to one of claims 1 to 4, characterized in that the resilient blade (20) has two protrusions (22) in the shape of bosses corresponding to blind holes (18) or other recesses formed in the pulley (16) in positions for which said blind holes or other recesses are diametrically opposite.

6. Centre according to claim 1, characterized in that the protrusions (31) are formed by a spindle extending through a portion of smaller diameter (14a) of the shaft (14), said spindle being maintained by a compression spring (32) inside notches (30) with slanting edge (30a) of the pulley (16).

7. Centre according to one of claims 1 to 6, characterized in that the shaft (14) is maintained inside bushes (13) of a bearing cage (11) fixed to a casing (6) of the mixing centre by the torque limiter device.

8. Centre according to one of claims 1 to 7, characterized in that the free end (14b) of the shaft (14) comprises a transverse spindle (23) engaged inside open sleeves (26, 27) of a coupling member (24).

9. Centre according to one of claims 1 to 8, characterized in that the spindle (23) of the free end (14b) of the shaft (14) is snapingly retained inside the open sleeves (26, 27).
